# EUROPEAN PATENT APPLICATION

(11) **EP 2 278 834 A1**
(43) Date of publication of application: **26.01.2011**
(21) Application number: 09305627.3
(22) Date of filing: 30.06.2009
(51) Int. Cl.: H04W 12/06, H04W 12/08, H04L 29/06, H04W 48/08

(54) **A method for transferring data between a client and a server in a telecommunication network, as well as a system, a server, a client and a node**

(71) Applicant: Alcatel Lucent, 75008 Paris (FR)
(72) Inventor: Vittone, Pascal, 75009 Paris (FR); Chakri, Al Mahdi, 75015 Paris (FR); Conte, Alberto, 94230 Cachan (FR)
(74) Representative: Brose, Gerhard

(57) **Abstract**

The invention concerns a method for transferring data in a telecommunication network, wherein transferring of said data is performed between a client 101 and a first server 103 via said telecommunication network, and wherein access of said client 101 to said telecommunication network is granted, depending on an access right of said client 101 to said first server 103.

## Description

### Background of the invention

The invention relates to a method for transferring data between a client and a server via a telecommunication network according to the preamble of claim 1, a system according to the preamble of claim 6, a server according to the preamble of claim 7, a client according to the preambles of claim 8 and a node according to the preamble of claim 9.

Furthermore the invention relates to a computer program and a computer program product according to the preamble of claims 10 and 11 respectively.

The implementation of methods for transferring data between a client and a server is well understood from telecommunication networks for example implemented according to the long term evolution standard.

However, typically the authentication of said client trying to connect to said server via said telecommunication network is performed within said telecommunication network for example using a Subscriber Identity Module, The access of clients that have no authorization to access said telecommunication network, i.e. no Subscriber Identity Module (SIM), is prevented. Thus no third party service can be provided through said telecommunication network, unless said client has a subscription with said telecommunication network provider allowing the client to access said telecommunication network.

The object of the invention is thus to propose a method for transferring data between said client and said server via said telecommunication network, wherein permission to access said telecommunication network is granted to said client independent from an authorisation from within the telecommunication network.

### Summary of the invention

This object is achieved by a method according to the teaching of claim 1, a system according to the teaching of claim 6, a server according to the teaching of claim 7, a client according to the teaching of claim 8 and a node according to the teaching of claim 9.

The main idea of the invention is to transfer data in a telecommunication network, wherein transferring of said data is performed between a client and a first server via said telecommunication network, and wherein access of said client to said telecommunication network is granted, depending on an access right of said client to said first server.

This enables said client to access said telecommunication network without authentication from within said telecommunication network. Instead said authentication and the authorization to use said telecommunication network are determined by said first server.

This enables a provider of a first service offered by said first server to authorize clients to use said telecommunication network. This way a provider of said first service can offer said first service to said client, even if said client doesn't have an authorization from an operator of said telecommunication network, to use said telecommunication network.

Advantageously said provider of said first service, in particular provided on said first server, and a cost for a use of said telecommunication network are determined dynamically, in particular to charge said cost to said provider. This way a telecommunication network provider can charge said cost to said provider of said first service instead of billing said client.

Advantageously a second server, in particular offering a second service, is determined, and access to said second server is offered to said client, in particular in case said first server or said first service provided on said first server is not available or accessible, in particular via said telecommunication network. This way said telecommunication network provider can offer an alternative service to said client.

Advantageously a node in said telecommunication network broadcasts a first message, in particular indicating that said telecommunication network offers access to a third party service. This way said client can pick a specific telecommunication network in case multiple telecommunication networks are available. This speeds up the connection process.

Advantageously said client broadcasts a second message, in particular indicating that said client requests access to a third party service. This allows an access point to identify third party service requests and distinguish them from other requests. This speeds up the connection process further.

Further developments of the invention can be gathered from dependent claims and the following description.

### Brief description of the drawings

In the following the invention will be explained further making reference to the attached drawings.
Fig. 1 schematically shows a system comprising a telecommunication network, a first server and a client.
Fig. 2 schematically shows a first sequence diagram, showing some typical sequences in a first method according to a first embodiment of the invention.
Fig. 3 schematically shows a second sequence diagram, showing further typical sequences in a second method according to a second embodiment of the invention.
Fig. 4 schematically shows said system, further comprising a hilling center.
Fig. 5 schematically shows a third sequence diagram, showing some typical sequences in a third method according to a third embodiment of the invention.
Fig. 6 schematically shows said system, further comprising a database and a second server.

### Detailed description of the Invention

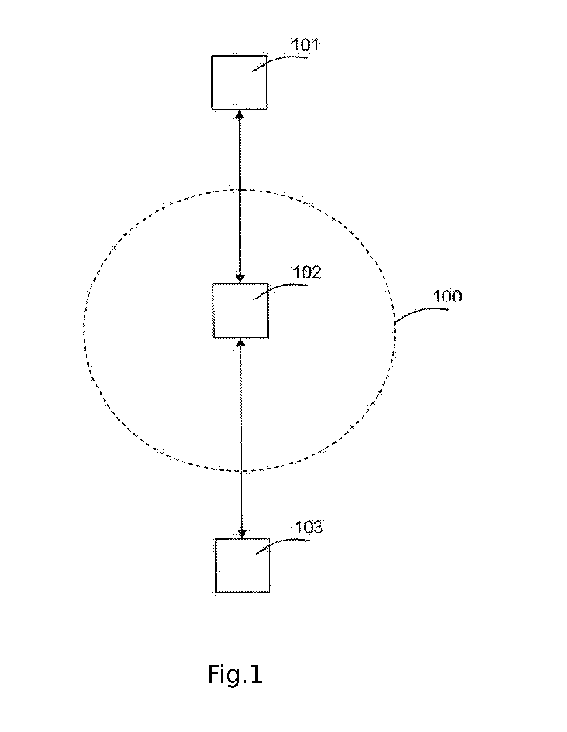

Fig. 1 shows a system comprising a telecommunication network 100, a first server, for example a Web server 103, and a client, for example a camera 101.

Said telecommunication network 100 in addition comprises a node, for example an access point 102.

Said access point 102 is adapted to provide access to said telecommunication network 100 for example according to the Long Term Evolution (LTE) standard. Alternative communication standards like for example Global System for Mobile communications standard (GSM) and the General Packet Radio Service standard (GPRS) or IEEE 802.11 may be used likewise.

Said Web server 103 is adapted to provide a first service, for example a first Web service, like an online photo printing service.

Said camera 101 is adapted to access said Web server 103 via said telecommunication network 100. To that end said camera comprises for example a mobile network interface enabling communication with said network according to said LTE standard, particularly via said access point 102. Additionally said camera 101 comprises communication means adapted to connect to said first Web server 103 to access said first service, for example via the internet protocol.

The invention is not limited to this particular design of said telecommunication network 100. Likewise said Web server 103 and said access point 102 can be combined to a single device adapted to provide said first Web service as well as access for said camera 101 to said first web service or said telecommunication network 100.

Furthermore said telecommunication network 100 can comprise additional nodes, for example between said access point 102 and said Web server 103.

Additionally the invention is neither limited to the use of the internet protocol. Likewise all other types of protocols, enabling said camera 101 to access said Web server 103 can be used. Such protocols include, but are not limited to point-to-point protocol or X.25 protocol.

Likewise the invention applies to other services like application services or database services, for example for downloading music, as well as other types of clients, like portable music or video players.

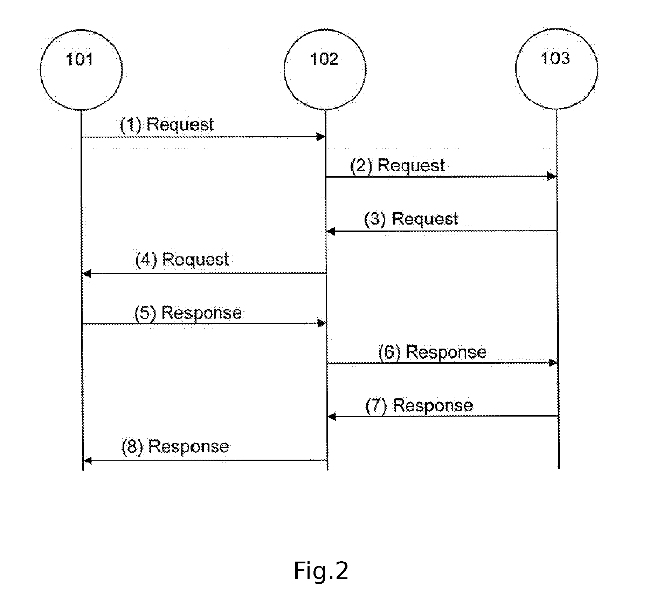

Fig. 2 schematically shows a first sequence diagram, showing some typical sequences in a first method for transferring data between said camera 101 and said Web sever 103 according to a first embodiment of the invention.

Whenever a user of said camera 101 intents to access said first Web service, said camera 101 broadcasts a message 1, Request, requesting access to said Web server 103. This broadcast is for example repeated frequently, for example until a reply is received, or a timer times out.

Said access point 102 forwards said message 1 as a message 2, Request, to said Web server 103.

Said Web server 103 receives said message 2, and replies to said access point 102 with a message 3, Request, to request authentication credentials from said camera 101.

Said access point 102 forwards said message 3 as a message 4, Request, to said camera 101.

As a reply to said message 4, said camera 101 sends a message 5, Response, containing authentication credentials of said user or said camera 101, to said access point 102.

Said access point 102 forwards said message 5 as a message 6, Response, to said Web server 103.

As reply to said message 6, said Web server 103 sends a message 7, Response, containing an access right of said camera 101, to said access point 102.

Optionally said access point 102 forwards said message 7 as a message 6, Response, containing said access right or indicating said access right, to said camera 101.

Additionally or Alternatively to message 8, access to said first service is implicitly granted, for example thanks to a redirection triggered by said Web server 103 to connect said camera 101 to another WEB page.

Additionally a network authentication for said camera 101 may be done before accepting said message 1. To that end said camera 101 is adapted to provide said authentication credentials of said camera 101 to said access point 102, e.g. in a authentication message sent during a network authentication process performed before said message 1 is sent by said camera 101.

Additionally said access point 102 is adapted to request and check said authentication credentials of said camera 101, in said network authentication process, prior to accepting said message 1. Said authentication credentials are for example X.509 certificates. Said network authentication process is for example performed according to the X.509 standard.

Said authentication credentials of said camera 101, e.g. X,509 certificate could be distinct of said user credentials thus enabling e.g. credit card payment on the Web Server 103. Said authentication credentials of said camera 101 can be used to associate the device with the rights of a user e.g. number of photos bought online with a credit card and allow service delivery, even if the connection via said telecommunication network 100 is interrupted during delivery of said first service to said camera 101.

Additionally said authentication credentials of said camera 101 may be sent from said access point 102 to said Web server 103 for authentication of said camera 101. To that end said access point 102 and said Web server 103 may be adapted to send and receive said authentication credentials of said camera 101 respectively.

The recipient of said messages used for communication between camera 101, access point 102 or Web server 103 is for example determined by addresses according to the internet protocol. Other addressing methods like point-to-point protocol may be used as well.

Said first Web service is for example identified by a uniform resource locator entered by said user of said camera 101 into a browser application running on said camera 101. Other alternatives include a fix address of said web server 103, embedded in said camera 101 at the time of production or using a service directory from the telecommunication network 100 or a third party.

In case said uniform resource locator is used, said access point 102 may be adapted to retrieve a first address of said Web server 103, for example by resolving said uniform resource locator using a database, e.g. a domain name system, containing a mapping of said first Web service's uniform resource locator to said first address of said Web server 103.

Said Web server 103 is adapted to authenticate said camera 101, for example by authenticating said authentication credential of said camera 101, e.g. a unique device identifier of said camera 101, or a user credential. Furthermore said camera 101 is adapted to support said network authentication process.

Such authentication techniques, for example according to the X.509 standard or the authentication, authorization and accounting (AAA) protocol, are known to a person skilled in the art and not explained further.

In case authentication is done using said unique device identifier, e.g. a SIM card, an association between said unique device identifier and said user credentials has to be done to avoid theft of service or to allow permanent service subscription for said camera 101. This association can be done for example by storing a mapping of said unique device identifier to said user credentials, for example before said first service can be used by said camera 101. This information can be entered for example by said user of said camera 101 via a Web interface of said first service.

If an authentication of said credentials was successful, said access right is determined by said Web server 103 for example to allow access to said camera 101 to use said telecommunication network. If said authentication fails, said access right is determined by said Web server 103 for example to deny said camera 101 access to said telecommunication network 100.

Additionally a result of said authentication may be used by said Web server 103 to grant access to said first Web service.

Said access point 102 is adapted to grant access to said telecommunication network 100 depending on said access right of said camera 101. If said access right received in message 7 from said Web server 103 indicates, that said camera 101 is allowed to use said telecommunication network 100, said access point 102 continues to forward messages from said camera 101 to said Web server 103 and vice-versa.

In case said access right indicates that said camera 101 is not allowed to use said telecommunication network 100, said access point 102 denies access to said telecommunication network 100, for example by dropping all messages received from said camera 101.

Additionally said access point 102 may be adapted to include mechanisms allowing to limit the use of telecommunication network 100 by camera 101 to only access the Web server 103. Mechanisms for limiting said use are for example implemented using filtering methods well known to the person skilled in the art, e.g. by means of a firewall.

This way access of said client, e.g. said camera 101 to said telecommunication network 100 is granted, in particular by said access point 102, depending on said access right of said client to said first server, e.g. said Web server 103.

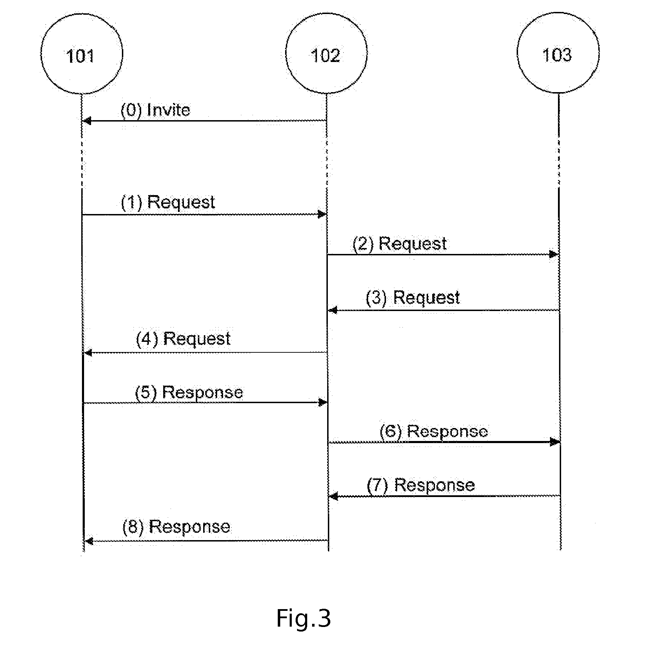

Fig. 3 schematically shows a second sequence diagram, showing further typical sequences in a second method according to a second embodiment of the invention.

Said second method is based on said first method. Therefore messages 1 to 8 and the description of messages 1 to 8 of said second method correspond to the messages 1 to 8 of said first method.

Said second method includes an additional first message, message 0, Invite, indicating that said telecommunication network 100 offers access to a third party service, in particular said first service provided by said first server, e.g. said Web server 103. Said first message is broadcasted frequently for example by said access point 102.

To this end said access point 102 is adapted to broadcast said first message, for example by configuring said access point 102 when it is deployed in the field.

Additionally said client, e.g. said camera 101 is adapted to listen for and receive said first message. Said camera 101, for example starts to listen for said first message, before broadcasting said message 1, requesting access to said Web server 103. This way said camera 101 is able to pick an access point 102 out of a number of access points available, by directly sending said message 1 to said access point 102 instead of broadcasting it. The advantage of this second embodiment is that the connection to said Web server 103 can be established quicker.

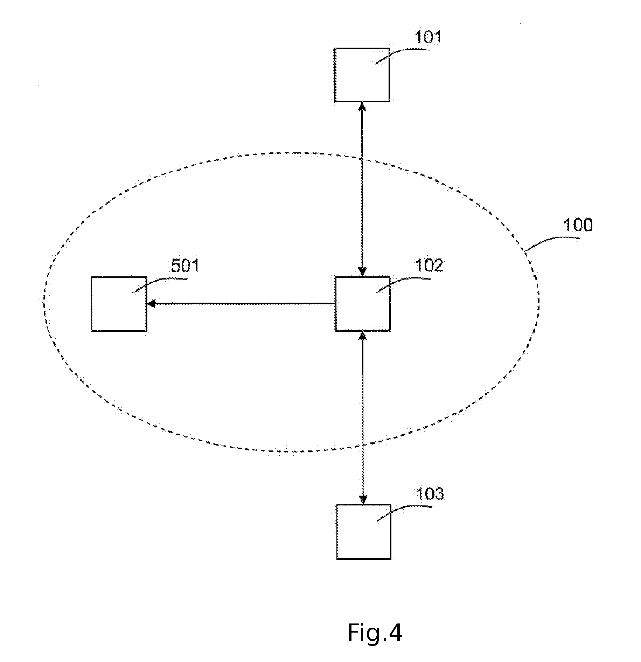

Fig. 4 schematically shows said system further comprising a billing center 501. The elements in fig. 4 corresponding to elements of said system in fig. 1 have the same reference sign.

Said billing center 501 is connected for example to said access point 102. Said billing center 501 could be connected to any other node in said telecommunication network or for example to the Web server 103 directly as well, for example in case the Web server 103 acts as access point for said camera 101 too.

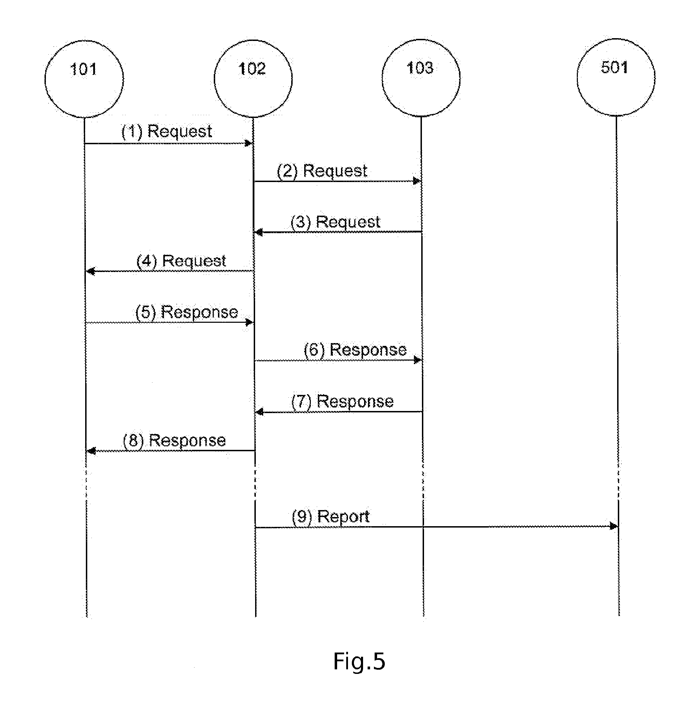

Fig. 5 schematically shows a third sequence diagram, showing some typical sequences in a third method according to a third embodiment of the invention.

According to said third embodiment, the transfer of data between said camera 101 and said Web server 103 via said telecommunication network 100 is performed as described in said first embodiment.

Said third method according to said third embodiment is based on said first method of said first embodiment. Therefore messages 1 to 8 according to said third method and their description correspond to said messages 1 to 8 according to said first method.

Additionally, for example said access point 102, is adapted to measure a cost for the usage of said telecommunication network 100. For example an amount of data transferred between said camera 101 and said Web server 103 is measured. Said measurement of said data may be performed by another node of said telecommunication network 100 alternatively.

Said measurement is for example started, as soon as said message 1 or said message 7 is received by said access point 102, thus indicating that said camera 101 is using said telecommunication network 100. Said measurement is for example stopped as soon as said camera 101 disconnects from said access point 102. Start and end of said measurement may be triggered by other means, for example by separate trigger messages send from said Web server 103 to said access point 102, or by a trigger determined by said access point, e.g. by monitoring said data transfer.

Said Web server 103 for example is adapted to send a first trigger to start said measurement as soon as authentication of said camera 101 was successfully performed. Additionally said Web server 103 is adapted to send a second trigger to stop said measurement as soon as said client disconnects from said first Web service, e.g. as soon as a logout request is received.

After said measurement is complete, an additional message 9, Report, indicating said cost of said usage of said telecommunication network 100, is for example determined by and sent from said access point 102 to said billing center 501. Said access point 102 is for example configured by an operator of said telecommunication, network to send all billing information, such as said message 9, to said billing center 501.

Said message 9 for example contains a call data record, adapted to be processed by said billing center 501 for charging a provider of said first Web service. To that end said call data record for example contains an identifier of said provider.

To determine said identifier of said provider, said access point 102 is adapted for example to extract information about said provider from said message 1, containing said request to access said first Web service. Alternatively said access point 102 can for example connect to a first database containing information about first Web service providers, and look up, e.g. the name of said first Web service provider matching said fix address.

The billing process and additional data required in said call data record are depending on the billing method used. Such billing methods are well known to a person skilled in the art and not explained further.

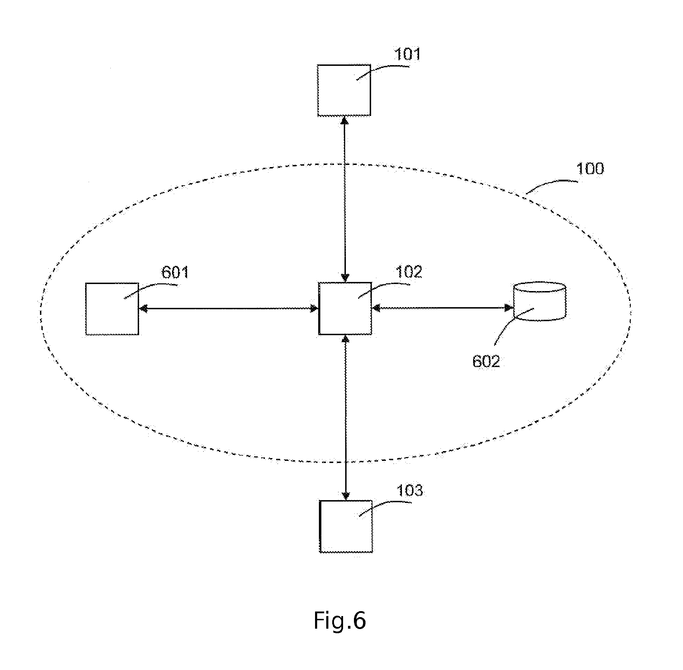

Fig. 6 schematically shows said system further comprising a database 602 and a second server 601.

The fourth embodiment is based on any of the aforementioned embodiments, Identical reference signs are used for elements in fig. 6 corresponding to elements from fig. 1. The messages according to said fourth embodiment are equivalent to the messages of any of the aforementioned embodiments.

As depicted in fig. 6 said access point 102 is connected to said second server 601, and said second database 602. Said connection can be direct as shown in fig. 6 or via various nodes of said telecommunication network. Communication between said second server 601, said database 602 and the access point 102 is performed for example using a communication protocol, like the internet protocol. Other communication protocols may be used as well.

Said database 602 is adapted to store information about said Second server 601. For example said database 602 stores a list of second Web services that said second server 601 provides.

According to said fourth embodiment of the invention said access point 102 is adapted to determine whether said first server 103 or said first service provided on said first server 103 is available to said camera 101.

The availability of said first server 103 is for example determined by measuring the response time of said first server 103, i.e. the time that passes before said message 3 is received from said first server 103, after said message 2 was sent from said access point 102 to said server 103. In case said response time exceeds a first threshold, for example 500 milliseconds, it is determined that said first server 103 is not available.

Alternatively said access point 102 can determine the availability of said first server 103 or said first service in a list of available servers or services, for example stored in said database 602.

The accessibility of said first server 103 or said first service is for example determined by said access point 102 by analyzing said message 7 received from said first server 103. In case said message 7 indicates that said camera 101 is not allowed to access said telecommunication network 100, it is determined that said first server 103 or said first service is not accessible to said camera 101.

Furthermore said access point 102 is adapted to determine a modified message 8, for inviting said camera 101 to access said second server 601 instead of said first server 103.

Said modified message 8 is determined for example, whenever said message 7 indicates, that said camera 101 is not allowed to access said telecommunication network 100, Alternatively said message 8 is determined if no response is received from said Web server 103 within said response time.

Said modified message 8 contains for example an indicator, i.e. a first flag, that an alternative is proposed, as well as a server address, e.g. an internet protocol address of said second server 601.

Additionally said modified message a may contain information about said second service offered by said second server 601. Information about said second service may for example include the name of said second service.

Furthermore said access point 102 is adapted to send said modified message 8, inviting said camera 101 to access said second server 601. Said modified message 8 is for example send to said camera 101 whenever a new modified message 8 has been determined by said access point 102.

According to said fourth embodiment said camera 101 is adapted to receive said modified message 8 and determine a modified message 1, for requesting access to said second service 601.

Said modified message 1, requesting access to said second service is for example determined by said camera 101 every time a modified message 8 is received. Alternatively a user prompt is generated by said camera 101 on a display of said camera 101. Said user prompt is for example asking for permission to access said second service provided by said second server 601. Said modified message 1 is for example only determined and sent if said user agrees to using said second service, for example by pressing a button on said camera 101.

This way said user of said camera 101 can pick an alternative service in case said web server 103 or said first service is not accessible or not available to said camera 101, in particular via said telecommunication network 100.

Additionally in a modification to any of the embodiments of said invention, said camera 101 is be adapted to broadcast a second message, indicating for example by a second flag that said camera 101 requests access to a third party service, before broadcasting message 1.

Furthermore said access point 102 is adapted to authenticate any device requesting to access said telecommunication network 100, except in case said second message is received. In case said second message is received, said access point grants acess for said camera 101 to said telecommunication network 100, without performing any authentication.

Additionally said access point 102 might be adapted to only allow access to server addresses known, to be valid addresses of servers providing known third party services. For example said database 602 comprises a list of said server addresses, and said access point 102 forwards messages received from said camera 101 only, if the recipient's address is found in said database 602.

This modification allows transferring data between said camera 101 and said server 103 for example for the purpose of authenticating said camera 101 by said first server 103.

Additionally or alternatively said Web server 103 is adapted to monitor and analyze requests a camera 101 to access said Web server 103. This is for example done using a method for intrusion or misuse detection using e.g. a misuse detection agent. Such misuse or intrusion detection methods and systems to perform them are known to a person skilled in the art and not further described here.

In case a misuse or abuse by said camera 101 is detected, e.g. many unsuccessful access requests from the same camera 101 are received by said first server 103, said camera 101 is added to a blacklist, e.g. a list containing unique identifiers of clients that are suspected to misusing or abusing said first server 103 or said telecommunication network 100.

To that end said Web server 103 sends an indication of the misuse and said unique identifier of said camera 101 to said telecommunication network 103, to be stored there.

Said blacklist is for example reported by said Web server 103 to said access point 102 using signaling messages. To that end said web server 103 and said access point 102 are adapted to send and receive said signaling messages.

Additionally said access point is adapted to store said blacklist on a nonvolatile storage device in said telecommunication network 100. Clients that are listed in said blacklist, are then blocked from access to said telecommunication network 100.

To that end said camera 101 is manufactured to include said unique identifier, preferably in a way that manipulation of said unique identifier is not possible. For example said unique identifier is a fix number, like a media access control (MAC) address given to said camera 101 in a read only storage by a manufacturer of said camera 101.

Said camera 101 is also adapted to provide said unique identifier e.g. to said access point 102 as part of said message 1 when requesting access to said first server 103.

Said access point 102 is adapted to read said blacklist from said nonvolatile storage, to determine said unique identifier from said message 1, and to block said camera 101 if said unique identifier of said camera 101 is found in said blacklist.

Alternatively a whitelist, containing all clients that are allowed to access said telecommunication network 100 may be used instead.

Additionally to all of said embodiments, transferring of said data between said client and said server is terminated, depending on a disconnect message sent by said client or said server. To that end said client or said server are adapted to determine and send said disconnect message.

Additionally said client is adapted to store information about said telecommunication network 100, for example a network identifier. This information is for example stored whenever said disconnect message is sent or received. Furthermore said network identifier is then used for at first sending said message 1, to said access point 102 of the same telecommunication network 100. This allows selective addressing of said telecommunication network 100 for quicker reconnection by said client.

## Claims

1. A method for transferring data in a telecommunication network (100), wherein transferring of said data is performed between a client (101) and a first server (103) via said telecommunication network (100), and wherein access of said client (101) to said telecommunication network (100) is granted, depending on an access right of said client (101) to said first server (103).

2. The method according to claim 1, **characterized in that** a provider of a first service, in particular provided on said first server (103), and a cost for a use of said telecommunication network (100) are determined dynamically, in particular to charge said cost to said provider.

3. The method according to claim 1, **characterized, in that** a second server (501), in particular offering a second service, is determined, in particular using a service directory, and that access to said second server (501) is offered to said client (101), in particular in case said first server (103) or said first service provided on said first server (103) is not available or accessible, in particular via said telecommunication network (100).

4. The method according to claim 1, wherein a node (102) in said telecommunication network (100) broadcasts a first message, in particular indicating that said telecommunication network (100) offers access to a third party service.

5. The method according to claim 1, wherein said client (101) broadcasts a second message, in particular indicating that said client (101) requests access to a third party service.

6. The method according to claim 1, wherein a node (102) in said telecommunication network (100) sends credentials of said client (101) to said first server (103), and wherein said first server (103) determines said access right depending on said credentials.

7. A system for transferring data in a telecommunication network (100), wherein a client (101) and a first server (103) are adapted for transferring said data between said client (101) and said first server (103) via said telecommunication network (100), and wherein a node (102) of said telecommunication network (100) is adapted to grant said client (101) access to said telecommunication network (100), depending on an access right of said client (101) to said first server (103).

8. A server (103) for transferring data via a telecommunication network, (100), adapted to connect a client (101), and to determine an access right for said client (101) to said telecommunication network (100).

9. A client (101) for transferring data via a telecommunication network (100), adapted to send a third message, in particular indicating that said client (101) requests access to a third party service.

10. A node (102) for transferring data via a telecommunication network (100), adapted to grant, a client (101) access to said telecommunication network (100), depending on an access right for said client (101) to a first server (103).

11. A computer program for transferring data in a telecommunication network (100) wherein said computer program, when executed on a computer, causes the computer to transfer said data between a client (101) and a first server (103) via said telecommunication network (100), and wherein access of said client (101) to said telecommunication network (100) is granted, depending on an access right of said client (100) to said first server (103).

12. A computer program product for transferring data in a telecommunication network (100) adapted to connect a client to said first service via a first node of said telecommunication network, comprising a computer usable medium having a computer readable program, wherein said computer readable program, when executed on a computer, causes the computer to transfer said data between a client (101) and a first server (103) via said telecommunication network (100), and wherein access of said client (101) to said telecommunication network (100) is granted, depending on an access right of said client (100) to said first server (103).
